# EUROPEAN PATENT APPLICATION

(11) **EP 4 656 420 A1**
(43) Date of publication of application: **03.12.2025**
(21) Application number: 23936477.1
(22) Date of filing: 18.12.2023
(51) Int. Cl.: B60G 17/052, B60G 17/015, B60G 17/016, B60G 17/019

(54) **DYNAMIC AIR SUSPENSION LEVELING METHOD AND APPARATUS, DEVICE, AND READABLE STORAGE MEDIUM**

(30) Priority: 05.05.2023 CN 202310497059
(71) Applicant: Voyah Automobile Technology Company Ltd., Wuhan, Hubei 430050 (CN)
(72) Inventor: LIU, Wu, Wuhan, Hubei 430050 (CN); LI, Shuo, Wuhan, Hubei 430050 (CN); ZHENG, Taotao, Wuhan, Hubei 430050 (CN); CHEN, Kui, Wuhan, Hubei 430050 (CN); ZHANG, Leibo, Wuhan, Hubei 430050 (CN); PEI, Jinshun, Wuhan, Hubei 430050 (CN); ZHAI, Runguo, Wuhan, Hubei 430050 (CN); CAO, An, Wuhan, Hubei 430050 (CN); LIU, Te, Wuhan, Hubei 430050 (CN); JIANG, Minglong, Wuhan, Hubei 430050 (CN)
(74) Representative: Boult Wade Tennant LLP
(86) International application number: PCT/CN2023/139441
(87) International publication number: WO 2024/230173

(57) **Abstract**

The present disclosure provides an air suspension dynamic leveling method, apparatus, device, and readable storage medium. The air suspension dynamic leveling method includes: if a vehicle is in a motion state and an absolute value of an expansion-compression speed of each air spring is less than a speed threshold, determining that the vehicle is in a stable state; when the vehicle is in the stable state, detecting whether a target height sensor is present, wherein an absolute value of a mean value of real-time error values of the target height sensor in a preset time period is greater than a mean threshold, and a real-time error value is a difference between a real-time measurement value of the height sensor and a target height value corresponding to a height level of an air suspension; and if the target height sensor is present, when the vehicle is in the stable state, adjusting a height of an air spring corresponding to the target height sensor to level the air suspension of the vehicle.

## Description

### CROSS-REFERENCE TO RELATED APPLICATIONS

The present application claims priority to Chinese Patent Application No. 202310497059.5, filed on May 05, 2023. The disclosure of the aforementioned application is hereby incorporated by reference in its entirety.

### TECHNICAL FIELD

The present disclosure relates to the field of the air suspension technology and, in particular, to an air suspension dynamic leveling method, an apparatus, a device and a readable storage medium.

### BACKGROUND

With the development of the vehicle technology, a configuration rate of air suspensions on vehicles has been gradually increased. A driver can choose to set different height levels for an air suspension, and for the vehicle, it can raise or reduce height of the air suspension by inflating and deflating, in order to adjust the height of a vehicle body to a height level set by the driver. If the driver adjusts the height of the air suspension when the vehicle is stationary on uneven or sloping road surfaces, it may result in that the height of the vehicle body cannot maintain an accurate height level after adjusting the air suspension. After the vehicle starts to move, there may be abnormal states such as tilting or twisting of the body posture, which may bring an unpleasant driving experience to users. In extreme cases, there may also be certain safety hazards.

### SUMMARY

By utilizing an air suspension dynamic leveling method, apparatus, device, and readable storage medium provided in one or more implementations of the present disclosure, the aim is to solve the technical problem in the prior art that height of the vehicle body is inconsistent with height level of the air suspension during movement of the vehicle .

In a first aspect, the present disclosure provides an air suspension dynamic leveling method, the air suspension dynamic leveling method includes: if a vehicle is in a motion state and an absolute value of an expansion-compression speed of each air spring is less than a speed threshold, determining that the vehicle is in a stable state; when the vehicle is in the stable state, detecting whether a target height sensor is present, where an absolute value of a mean value of real-time error values of the target height sensor in a preset time period is greater than a mean threshold, and a real-time error value is a difference between a real-time measurement value of the height sensor and a target height value corresponding to a height level of an air suspension; and if the target height sensor is present, when the vehicle is in the stable state, adjusting a height of an air spring corresponding to the target height sensor to level the air suspension of the vehicle.

In a second aspect, the present disclosure provides an air suspension dynamic leveling apparatus, where the air suspension dynamic leveling apparatus includes: a first determining module is configured to, if a vehicle is in a motion state and an absolute value of an expansion/compression speed of each air spring is less than a speed threshold, determine that the vehicle is in a stable state; a detecting module is configured to, when the vehicle is in the stable state, detect whether a target height sensor is present, where an absolute value of a mean value of real-time error values of the target height sensor in a preset time period is greater than a mean threshold, and the real-time error value is a difference between a real-time measurement value of the height sensor and a target height value corresponding to a height level of an air suspension; and an adjusting module is configured to, if the target height sensor is present, when the vehicle is in the stable state, adjust a height of an air spring corresponding to the target height sensor to level the air suspension of the vehicle.

In a third aspect, the present disclosure provides an air suspension dynamic leveling device, where the air suspension dynamic leveling device includes a processor, a memory and an air suspension dynamic leveling program stored on the memory and executable by the processor, where the air suspension dynamic leveling program, when executed by the processor, implements the steps of the above-mentioned air suspension dynamic leveling method.

In a fourth aspect, the present disclosure provides a readable storage medium, where the readable storage medium stores an air suspension dynamic leveling program, where the air suspension dynamic leveling program, when executed by a processor, implements the steps of the above-mentioned air suspension dynamic leveling method.

### BRIEF DESCRIPTION OF DRAWINGS

FIG. 1 is a flowchart diagram of an air suspension dynamic leveling method according to an embodiment of the present disclosure.
FIG. 2 is a schematic connection diagram of relevant functional modules in a vehicle provided in an embodiment of the present disclosure.
FIG. 3 is a flowchart diagram of detecting whether a target height sensor is present according to an embodiment of the present disclosure.
FIG. 4 is a schematic connection diagram between an air suspension dynamic leveling apparatus and relevant functional modules in a vehicle according to an embodiment of the present disclosure.
FIG. 5 is a schematic structural diagram of hardware of an air suspension dynamic leveling device according to an embodiment of the present disclosure.

The purposes, functional features, and advantages of the present disclosure will be further illustrated with reference to the accompanying drawings in conjunction with the embodiments.

### DESCRIPTION OF EMBODIMENTS

It should be understood that the specific embodiments described herein are merely used to explain the present disclosure and are not intended to limit the present disclosure.

In a first aspect, the embodiment of the present disclosure provides an air suspension dynamic leveling method.

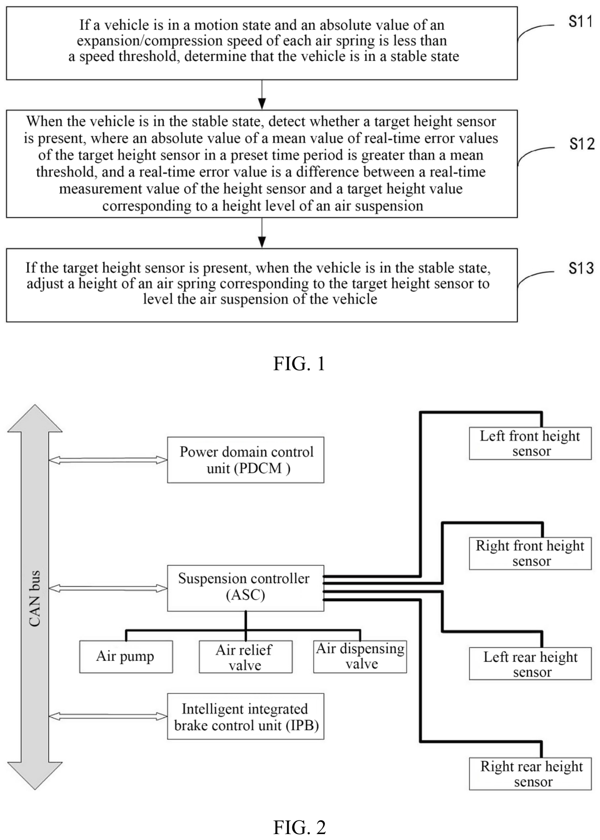

FIG. 1 shows a flowchart diagram of an air suspension dynamic leveling method in an embodiment of the present disclosure.

Referring to FIG. 1, in an embodiment, the air suspension dynamic leveling method includes the following steps.

S11, if a vehicle is in a motion state and an absolute value of an expansion/compression speed of each air spring is less than a speed threshold, determining that the vehicle is in a stable state.

In the present embodiment, the expansion/compression speed of each air spring represents a relative speed between corresponding vehicle body and wheels, and indicates compression and recovery states of a suspension. For the vehicle being in the motion state, when the vehicle is driving on uneven road surfaces or a driver performs acceleration, deceleration, steering, and other operations, there may be some movement in the wheels or the vehicle body, resulting in compress or recover motion of the suspension, and causing the absolute value of the expansion/compression speed of the air spring being greater than or equal to the speed threshold, it is determined that the vehicle is in an unstable state at this time. Correspondingly, when the absolute value of the expansion/compression speed of each air spring is less than the speed threshold, it is determined that the vehicle is in the stable state.

FIG. 2 shows a schematic connection diagram of relevant functional modules in a vehicle.

Referring to FIG. 2, a suspension controller can connect four height sensors through hard wires, and collect real-time height values of four suspensions of the vehicle. The suspension controller connects an air pump, an air relief valve, and an air dispensing valve through hard wires. Four air springs can be inflated by controlling the opening of the air pump and the air dispensing valve, thereby raising the height of the vehicle body. The four air springs can be deflated by controlling the opening of the air relief valve and the air dispensing valve, thereby reducing the height of the vehicle body. The suspension controller, an intelligent integrated brake control unit, and a power domain control unit are connected through a CAN bus.

As an optional implementation, before step S11, it also includes:
calculating a differential value of real-time measurement values of each height sensor to obtain a corresponding expansion/compression speed of each air spring.

In the present embodiment, the real-time measurement values of each height sensor are obtained at a certain frequency, for example, the real-time measurement values of each height sensor are obtained every 2 ms. A real-time measurement value of the height sensor represents a relative distance between a wheel and the vehicle body. A difference between a real-time measurement value at a next moment and a real-time measurement value at a previous moment represents an expansion /compression amount of a corresponding air spring during an interval duration. In some implementations, the differential value of the real-time measurement values is calculated, i.e., by dividing the difference between the real-time measurement value at the next moment and the real-time measurement value at the previous moment by the interval duration, the expansion/compression speed of the corresponding air spring can be obtained. Thus, the expansion/compression speed of the air spring can be obtained without additional sensors, thereby reducing cost.

As an optional implementation, before step S11, it also includes:
if the vehicle maintains a state that a vehicle speed is greater than a vehicle speed threshold and a gear position is in a driving gear for a certain duration, determining that the vehicle is in the motion state.

In the present embodiment, three indicators-vehicle speed, gear position, and duration-are used to determine whether the vehicle is in the motion state. In some implementations, it is necessary to ensure the effectiveness of a vehicle speed signal and a gear position signal. Specifically, referring to FIG. 2, the motion state of the vehicle is determined by receiving the vehicle speed signal and an effective vehicle speed signal from the intelligent integrated brake control unit, as well as the gear position signal and an effective gear position signal from the power domain control unit.

S12, when the vehicle is in the stable state, detecting whether a target height sensor is present, in some implementations, where an absolute value of a mean value of real-time error values of the target height sensor in a preset time period is greater than a mean threshold, and a real-time error value is a difference between a real-time measurement value of the height sensor and a target height value corresponding to a height level of an air suspension.

In the present embodiment, when the vehicle is in an unstable state, the real-time measurement values of the height sensor are affected by the uneven road surfaces or driving operations, resulting in significant fluctuations that do not accurately reflect an actual height level of the vehicle body, and the real-time error values calculated at this time are not meaningful for reference. Therefore, the present embodiment specifies that, based on the mean value of the real-time error values of the height sensor in the preset time period when the vehicle is in a stable state. Only the mean value of the real-time error values calculated at this time can accurately reflect whether the height of the vehicle body is inconsistent with the height level of the air suspension. A height sensor whose absolute value of the mean value of the real-time error values is greater than the mean threshold is defined as the target height sensor. In subsequent steps, a height of the vehicle body corresponding to the target height sensor should be adjusted.

In some implementations, the longer a duration of the preset time period, the smaller the mean threshold.

In the present embodiment, the real-time error values are continuously monitored in the preset time period, and the mean value of the real-time error values is calculated after the preset time period. During driving process, the vehicle may encounter uneven road surfaces such as potholes or bumps, or perform actions such as acceleration or braking, when the degree is low, the vehicle may remain in the stable state (the absolute value of the extension/compression speed of each air spring is less than the speed threshold), but the real-time error values at this time may interfere with a detection result. It can be understood that the longer the duration of the preset time period, the smaller the proportion of real-time error values collected when the vehicle passes over the uneven road surfaces during this period, and the smaller the impact on the mean value of the real-time error values. The mean value of the real-time error values can accurately reflect a deviation between the height of vehicle body and the height level of the air suspension. Therefore, when setting the preset time period and the mean threshold, the longer the duration of the preset time period, the smaller the mean threshold, which ensures the detection accuracy. Correspondingly, to avoid frequent triggering of adjustments, the shorter the duration of the preset time period, the larger the mean threshold to eliminate interference from the uneven road surfaces or driving movements.

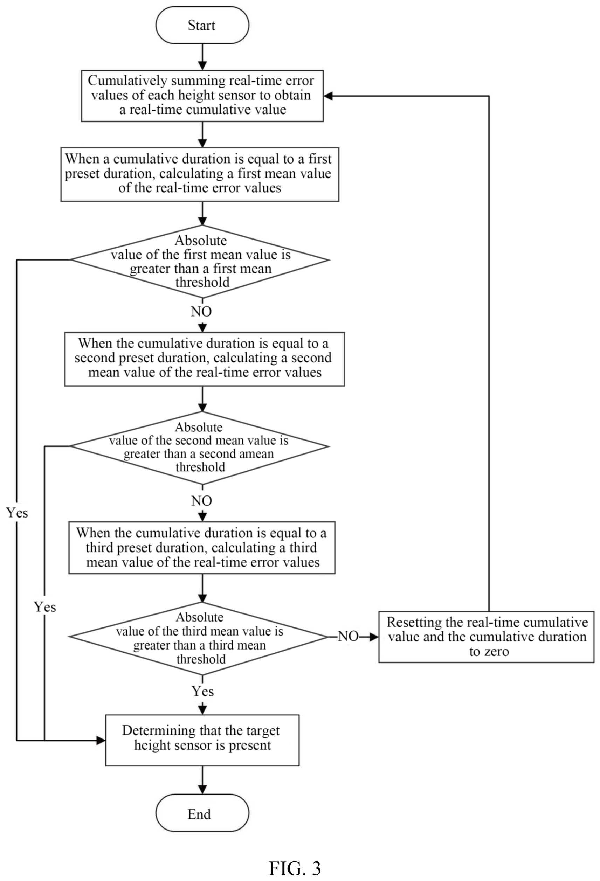

FIG. 3 shows a flowchart diagram of detecting whether a target height sensor is present in an embodiment of the present disclosure.

Referring to FIG. 3, In some implementations, the step of detecting whether the target height sensor is present includes:
starting timing from a moment that the vehicle enters the stable state, and cumulatively summing real-time error values of each height sensor to obtain a real-time cumulative value;
when a timing duration is equal to a first preset duration, averaging the real-time cumulative value of each height sensor to obtain a first mean value, and detecting whether an absolute value of the first mean value is greater than a first mean threshold;
if the absolute value of the first mean value is greater than the first mean threshold, determining that the target height sensor is present;
if the absolute value of the first mean value is less than or equal to the first mean threshold, when the timing duration is equal to a second preset duration, averaging the real-time cumulative value of the each height sensor to obtain a second mean value, and detecting whether an absolute value of the second mean value is greater than a second mean threshold, in some implementations, the second preset duration is greater than the first preset duration, and the second mean threshold is less than the first mean threshold;
if the absolute value of the second mean value is greater than the second mean threshold, determining that the target height sensor is present;
if the absolute value of the second mean value is less than or equal to the second mean threshold, when the timing duration is equal to a third preset duration, averaging the real-time cumulative value of the each height sensor to obtain a third mean value, and detecting whether an absolute value of the third mean value is greater than a third mean threshold, in some implementations, the third preset duration is greater than the second preset duration, and the third mean value threshold is less than the second mean threshold;
if the absolute value of the third mean value is greater than the third mean threshold, determining that the target height sensor is present;
if the absolute value of the third mean value is less than or equal to the third mean threshold, resetting the real-time cumulative value and the timing duration to zero, and returning and performing the step of and cumulatively summing the real-time error values of each height sensor to obtain the real-time cumulative value.

In the present embodiment, the third preset duration is a complete detection unit, the detection unit includes three detection moments, i.e., a moment when the timing duration is equal to the first preset duration, a moment when the timing duration is equal to the second preset duration, and a moment when the timing duration is equal to the third preset duration. From the above analysis, it can be seen that when the timing duration is equal to the third preset duration, a detection result is most accurate due to the longer timing duration (equivalent to a length of the preset time period). However, since the third preset duration is set relatively long, if the detection is only conducted at the moment when the timing duration is equal to the third preset duration, it may result in the vehicle body is in an incorrect posture for long time. Therefore, the present embodiment also sets two detection moments before this moment. The earlier the detection moment, the larger the corresponding mean threshold to eliminate interference from the uneven road surfaces or driving movements. If the absolute value of the mean value of real-time error values is still greater than the corresponding mean threshold after increasing the mean threshold, it indicates that the height of the vehicle body does need to be adjusted and the detection result can be obtained in advance. In this way, the present embodiment avoids frequent triggering of adjustments while ensuring a certain degree of adjustment timeliness, thereby avoiding the vehicle body from being in an incorrect posture for long time.

For example, in an embodiment, the first preset duration, the second preset duration, and the third preset duration are 100 seconds, 300 seconds, and 500 seconds, respectively, and the first mean threshold, the second mean threshold, and the third mean threshold are 30 millimeters, 20 millimeters, and 15 millimeters, respectively.

It should be noted that before obtaining the detection result that the target height sensor is present, if the timing duration reaches the third preset duration, it indicates the end of a detection unit, then, the real-time cumulative value and the timing duration will be reset to zero, and a next detection unit will begin. A starting moment of a first detection unit is a moment when the vehicle enters the stable state, and the starting moment of the subsequent detection unit is an ending moment of a previous detection unit.

S13, if the target height sensor is present, when the vehicle is in the stable state, adjusting a height of an air spring corresponding to the target height sensor to level the air suspension of the vehicle.

In the present embodiment, since adjustment of the height of the vehicle body is affected by the uneven road surfaces or driving operations when the vehicle is in the unstable state, it may not be possible to adjust to a corresponding height level and maintain high precision. Therefore, the present embodiment specifies that the adjustment of the height of the vehicle body should only be performed based on the detection result when the vehicle is in the stable state, ensuring that the height of the vehicle body is consistent with the height level of the air suspension. The specific operation of the adjustment of the height of the vehicle body involves adjusting the height of the air spring corresponding to the target height sensor to level the air suspension of the vehicle. Specifically, referring to FIG. 2, if the vehicle body needs to be raised, the opening of the air pump and air dispensing valve are controlled to inflate the air spring; if the vehicle body needs to be reduced, the opening of the air relief valve and air dispensing valve are controlled to deflate the air spring.

In some embodiments, the step of adjusting the height of the air spring corresponding to the target height sensor to level the air suspension of the vehicle includes:
if the mean value of the real-time error values of the target height sensor is positive, controlling a corresponding air spring to deflate;
if the mean value of the real-time error values of the target height sensor is negative, controlling the corresponding air spring to inflate.

In the present embodiment, since the mean value of the real-time error values reflects the deviation between the height of the vehicle body and the height level of the air suspension, a direction of height adjustment can be determined based on a sign of the mean value of the real-time error values. Specifically, if the mean value of the real-time error values of the target height sensor is positive, it indicates that the corresponding the height of the vehicle body is higher than the height level of the air suspension, and the corresponding air spring needs to be controlled to deflate in order to reduce the height of the vehicle body. If the mean value of the real-time error values of the target height sensor is negative, it indicates that the corresponding height of the vehicle body is lower than the height level of the air suspension, and the corresponding air spring needs to be controlled to inflate in order to raise the height of the vehicle body.

In some embodiments, after the step of controlling the corresponding air spring to deflate, the method further includes:
if the absolute value of the real-time error value of the target height sensor is less than or equal to an error tolerance value, stopping deflating the air spring.

After the step of controlling the corresponding air spring to inflate, the method further includes:
if the absolute value of the real-time error value of the target height sensor is less than or equal to an error tolerance value, stopping inflating the air spring.

In the present embodiment, during the process of adjusting the height of the air spring to level the air suspension of the vehicle, the real-time error values are continuously monitored to determine whether the adjustment is complete. Specifically, based on the adjustment accuracy requirements, the adjustment of the air spring has a certain error tolerance value, and it is not required that the measurement value of the height sensor be completely equal to the target height value corresponding to the height level of the air suspension. When the absolute value of the real-time error values is less than or equal to the error tolerance value, it indicates that the air spring has been adjusted to the desired position, and the deflation or inflation operation should be stopped.

In summary, the present disclosure determines whether the moving vehicle is in the stable state by the expansion/compression speed of each air spring. On one hand, the mean value of the real-time error values calculated when the vehicle is in the stable state can accurately reflect whether the height of the vehicle body is inconsistent with the height level of the air suspension, thereby determining whether the height of the vehicle body requires adjustment. On the other hand, only when the vehicle is in the stable state, the height of the vehicle body can be accurately adjusted to ensure that it is consistent with the height level of the air suspension. In the present disclosure, dynamic leveling for the air suspension is performed during vehicle movement to maintain the height of the vehicle body at the setting height level of the air suspension, so as to ensure good vehicle body posture, thereby enhancing the driving experience to users.

In a second aspect, embodiments of the present disclosure also provide an air suspension dynamic leveling apparatus.

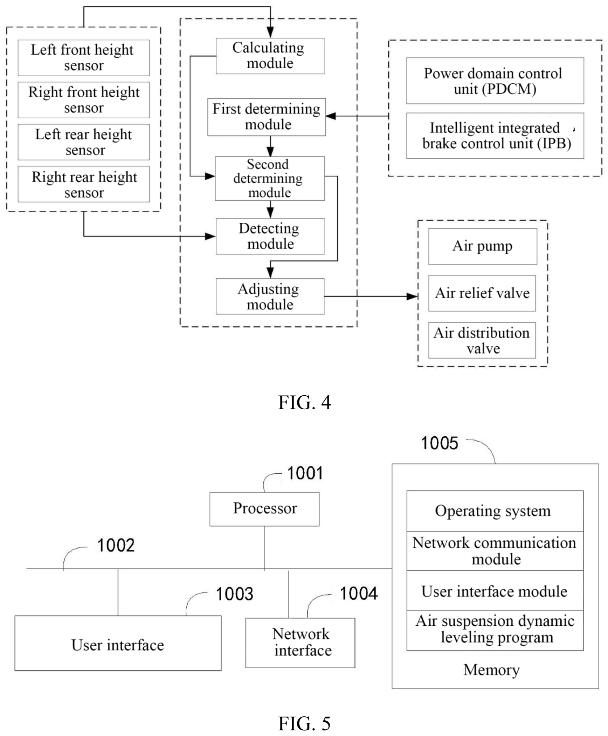

FIG. 4 shows a schematic connection diagram of an air suspension dynamic leveling apparatus and relevant functional modules in a vehicle in an embodiment of the present disclosure.

Referring to FIG. 4, in an embodiment, the air suspension dynamic leveling apparatus includes:
a first determining module, which is configured to, if a vehicle is in a motion state and an absolute value of an expansion-compression speed of each air spring is less than a speed threshold, determine that the vehicle is in a stable state;
a detecting module, which is configured to, when the vehicle is in the stable state, detect whether a target height sensor is present, in some implementations, where an absolute value of a mean value of real-time error values of the target height sensor in a preset time period is greater than a mean threshold, and the real-time error value is a difference between a real-time measurement value of the height sensor and a target height value corresponding to a height level of an air suspension;
an adjusting module, which is configured to, if the target height sensor is present, when the vehicle is in the stable state, adjust a height of an air spring corresponding to the target height sensor to level the air suspension of the vehicle.

In some implementations, the longer a duration of the preset time period in the detecting module, the smaller the mean threshold.

In some implementations, the detecting module is configured to:
start from a moment that the vehicle enters the stable state, and cumulatively sum real-time error values of each height sensor to obtain a real-time cumulative value;
when a timing duration is equal to a first preset duration, average the real-time cumulative value of each height sensor to obtain a first mean value, and detect whether an absolute value of the first mean value is greater than a first mean threshold;
if the absolute value of the first mean value is greater than the first mean threshold, determine that the target height sensor is present;
if the absolute value of the first mean value is less than or equal to the first mean threshold, when the timing duration is equal to a second preset duration, average the real-time cumulative value of the each height sensor to obtain a second mean value, and detect whether an absolute value of the second mean value is greater than a second mean threshold, in some implementations, the second preset duration is greater than the first preset duration, and the second mean threshold is less than the first mean threshold;
if the absolute value of the second mean value is greater than the second mean threshold, determine that the target height sensor is present;
if the absolute value of the second mean value is less than or equal to the second mean threshold, when the timing duration is equal to a third preset duration, average the real-time cumulative value of the each height sensor to obtain a third mean value, and detect whether an absolute value of the third mean value is greater than a third mean threshold, in some implementations, the third preset duration is greater than the second preset duration, and the third mean threshold is less than the second mean threshold;
if the absolute value of the third mean value is greater than the third mean threshold, determine that the target height sensor is present;
if the absolute value of the third mean value is less than or equal to the third mean threshold, reset the real-time cumulative value and the timing duration to zero, and return and perform the step of cumulatively summing the real-time error values of each height sensor to obtain the real-time cumulative value.

In some implementations, the adjusting module is configured to:
if the mean value of the real-time error values of the target height sensor is positive, control a corresponding air spring to deflate;
if the mean value of the real-time error values of the target height sensor is negative, control the corresponding air spring to inflate

In some implementations, the adjusting module is further configured to:
if the absolute value of the real-time error value of the target height sensor is less than or equal to an error tolerance value, stop deflating the air spring;
if the absolute value of the real-time error value of the target height sensor is less than or equal to an error tolerance value, stop inflating the air spring.

In some implementations, the air suspension dynamic leveling apparatus further includes a calculating module, configured to:
calculate a differential value of real-time measurement values of each height sensor to obtain a corresponding expansion/compression speed of each air spring.

In some implementations, the air suspension dynamic leveling apparatus further includes a second determining module, configured to:
if the vehicle maintains a state that a vehicle speed is greater than a vehicle speed threshold and a gear position is in a driving gear for a certain duration, determine that the vehicle is in the motion state.

In some implementations, the functional implementation of each module in the above-mentioned air suspension dynamic leveling apparatus corresponds to each step in the above-mentioned air suspension dynamic leveling method embodiment, and functions and implementation processes thereof will not be repeated here.

In a third aspect, embodiments of the present disclosure also provide an air suspension dynamic leveling device, where the air suspension dynamic leveling device can be a device with data processing function, such as a personal computer (personal computer, PC), a laptop, a server, etc.

FIG. 5 is a schematic structural diagram of hardware of an air suspension dynamic leveling device in an embodiment of the present disclosure.

Referring to FIG. 5, in the embodiment of the present disclosure, the air suspension dynamic leveling device may include a processor 1001 (such as a Central Processing Unit Central Processing Unit, CPU), a communication bus 1002, a user interface 1003, a network interface 1004, and a memory 1005. In some implementations, the communication bus 1002 is configured to implement connection communication between these components, the user interface 1003 may include a display (Display), an input unit such as a keyboard (keyboard), optionally, the network interface 1004 may include standard wired interfaces and wireless interfaces (such as Wireless Fidelity Wireless Fidelity, WI-FI interfaces), the memory 1005 may be a high-speed random access memory (random access memory, RAM) or a stable memory (non-volatile memory), such as a disk storage. Alternatively, the memory 1005 may also be a storage device independent of the above-mentioned processor 1001. The person skilled in the art can understand that the hardware structure shown in FIG. 5 does not constitute a limitation of the present disclosure, and may include more or fewer components than shown in the figure, or combine certain components, or arrange different components.

Continuing to refer to FIG. 5, the memory 1005 as a computer storage medium in FIG. 5 may include an operating system, a network communication module, a user interface module, and an air suspension dynamic leveling program. In some implementations, the processor 1001 can call the air suspension dynamic leveling program stored in the memory 1005 and execute the air suspension dynamic leveling method provided in the embodiments of the present disclosure.

In a fourth aspect, embodiments of the present disclosure provide a readable storage medium.

The readable storage medium in the present disclosure stores an air suspension dynamic leveling program therein, where the air suspension dynamic leveling program, when executed by a processor, implement steps of the above-mentioned air suspension dynamic leveling method.

The method for implementing the air suspension dynamic leveling program can refer to various embodiments of the air suspension dynamic leveling method of the present disclosure, which will not be repeated here.

It should be noted that in this article, the terms "including", "comprising", or any other variation thereof are intended to encompass non-exclusive inclusion, such that a process, a method, an object, or a system that includes a series of elements includes not only those elements, but also other elements not explicitly listed, or elements inherent to such process, method, object, or system. Without further limitations, the element limited by the statement "including a..." does not exclude the existence of other identical elements in the process, method, object, or system that includes that element.

The embodiments of the present disclosure described above are numbered for description only and do not represent the advantages or disadvantages of the embodiments.

Through the description of the above implementations, the person skilled in the art can clearly understand that the above embodiment methods can be implemented through software and necessary general hardware platforms. Of course, they can also be implemented through hardware, but in many cases, the former is a better implementation. Based on this understanding, the technical solutions in the present disclosure can essentially or contribute to the existing technology in the form of a software product. The computer software product is stored in a storage medium (such as ROM/RAM, magnetic disk, optical disk) as described above, and includes several instructions to enable a terminal device to execute the methods described in various embodiments of the present disclosure.

The above are only preferred embodiments of the present disclosure and do not limit the scope of the present disclosure. Any equivalent structure or equivalent process transformation made using the contents of the present disclosure specification and drawings, or directly or indirectly applied in other related technical fields, are also included in the scope of patent protection of the present disclosure.

## Claims

1. An air suspension dynamic leveling method, comprising:
if a vehicle is in a motion state and an absolute value of an expansion/compression speed of each air spring is less than a speed threshold, determining that the vehicle is in a stable state;
when the vehicle is in the stable state, detecting whether a target height sensor is present, wherein an absolute value of a mean value of real-time error values of the target height sensor in a preset time period is greater than a mean threshold, and the real-time error value is a difference between a real-time measurement value of the height sensor and a target height value corresponding to a height level of an air suspension; and
if the target height sensor is present, when the vehicle is in the stable state, adjusting a height of an air spring corresponding to the target height sensor to level the air suspension of the vehicle.

2. The air suspension dynamic leveling method according to claim 1, wherein the longer a duration of the preset time period, the smaller the mean threshold.

3. The air suspension dynamic leveling method according to claim 1, wherein the step of detecting whether the target height sensor is present comprises:
starting timing from a moment that the vehicle enters the stable state, and cumulatively summing real-time error values of each height sensor to obtain a real-time cumulative value;
when a timing duration is equal to a first preset duration, averaging the real-time cumulative value of each height sensor to obtain a first mean value, and detecting whether an absolute value of the first mean value is greater than a first mean threshold;
if the absolute value of the first mean value is greater than the first mean threshold, determining that the target height sensor is present;
if the absolute value of the first mean value is less than or equal to the first mean threshold, when the timing duration is equal to a second preset duration, averaging the real-time cumulative value of the each height sensor to obtain a second mean value, and detecting whether an absolute value of the second mean value is greater than a second mean threshold, wherein the second preset duration is greater than the first preset duration, and the second mean threshold is less than the first mean threshold; if the absolute value of the second mean value is greater than the second mean threshold, determining that the target height sensor is present;
if the absolute value of the second mean value is less than or equal to the second mean threshold, when the timing duration is equal to a third preset duration, averaging the real-time cumulative value of the each height sensor to obtain a third mean value, and detecting whether an absolute value of the third mean value is greater than a third mean threshold, wherein the third preset duration is greater than the second preset duration, and the third mean threshold is less than the second mean threshold; if the absolute value of the third mean value is greater than the third mean threshold, determining that the target height sensor is present;
if the absolute value of the third mean value is less than or equal to the third mean threshold, resetting the real-time cumulative value and the timing duration to zero, and returning and performing the step of cumulatively summing the real-time error values of each height sensor to obtain the real-time cumulative value.

4. The air suspension dynamic leveling method according to claim 1, wherein the step of adjusting the height of the air spring corresponding to the target height sensor to level the air suspension of the vehicle comprises:
if the mean value of the real-time error values of the target height sensor is positive, controlling a corresponding air spring to deflate;
if the mean value of the real-time error values of the target height sensor is negative, controlling the corresponding air spring to inflate.

5. The air suspension dynamic leveling method according to claim 4, wherein after the step of controlling the corresponding air spring to deflate, the method further comprises:
if the absolute value of the real-time error value of the target height sensor is less than or equal to an error tolerance value, stopping deflating the air spring;
after the step of controlling the corresponding air spring to inflate, the method further comprises:
if the absolute value of the real-time error value of the target height sensor is less than or equal to an error tolerance value, stopping inflating the air spring.

6. The air suspension dynamic leveling method according to any one of claims 1 to 5, wherein before the step if the vehicle is in the motion state and the absolute value of the expansion/compression speed of each air spring is less than the speed threshold, determining that the vehicle is in the stable state, the method further comprises:
calculating a differential value of real-time measurement values of each height sensor to obtain a corresponding expansion/compression speed of each air spring.

7. The air suspension dynamic leveling method according to any one of claims 1 to 5, wherein before the step if the vehicle is in the motion state and the absolute value of the expansion/compression speed of each air spring is less than the speed threshold, determining that the vehicle is in the stable state, the method further comprises:
if the vehicle maintains a state that a vehicle speed is greater than a vehicle speed threshold and a gear position is in a driving gear for a certain duration, determining that the vehicle is in the motion state.

8. An air suspension dynamic leveling apparatus, comprising:
a first determining module, configured to, if a vehicle is in a motion state and an absolute value of an expansion/compression speed of each air spring is less than a speed threshold, determine that the vehicle is in a stable state;
a detecting module, configured to, when the vehicle is in the stable state, detect whether a target height sensor is present, wherein an absolute value of a mean value of real-time error values of the target height sensor in a preset time period is greater than a mean threshold, and the real-time error value is a difference between a real-time measurement value of the height sensor and a target height value corresponding to a height level of an air suspension; and
an adjusting module, configured to, if the target height sensor is present, when the vehicle is in the stable state, adjust a height of an air spring corresponding to the target height sensor to level the air suspension of the vehicle.

9. An air suspension dynamic leveling device, comprising: a processor, a memory and an air suspension dynamic leveling program stored on the memory and executable by the processor, wherein the air suspension dynamic leveling program, when executed by the processor, implements the steps of the air suspension dynamic leveling method according to any one of claims 1 to 7.

10. A readable storage medium, wherein the readable storage medium stores an air suspension dynamic leveling program, wherein the air suspension dynamic leveling program, when executed by a processor, implement the steps of the air suspension dynamic leveling method according to any one of claims 1 to 7.
